(19) Europäisches Patentamt
European Patent Office
Office européen des brevets

(11) **EP 0 846 136 B1**

(12) **FASCICULE DE BREVET EUROPEEN**

(45) Date de publication et mention
de la délivrance du brevet:
**24.01.2001 Bulletin 2001/04**

(21) Numéro de dépôt: **96927951.2**

(22) Date de dépôt: **20.08.1996**

(51) Int Cl.$^7$: **C08G 18/36**, C08G 18/80

(86) Numéro de dépôt international:
**PCT/PT96/00007**

(87) Numéro de publication internationale:
**WO 97/07150 (27.02.1997 Gazette 1997/10)**

(54) **PROCEDE DE FABRICATION DE POLYMERES A BASE D'HUILE DE COQUILLE DE NOIX DE CAJOU**

VERFAHREN ZUR HERSTELLUNG VON AUF CASHEWNUSSSCHALENOEL BASIERENDEN POLYMEREN

PROCESS FOR PRODUCING POLYMERS BASED ON OIL OF CASHEW-NUT SHELLS

(84) Etats contractants désignés:
**AT BE CH DE DK ES FI FR GB GR IE IT LI LU MC NL PT SE**

(30) Priorité: **21.08.1995 PT 10176195**
**04.04.1996 PT 10186396**

(43) Date de publication de la demande:
**10.06.1998 Bulletin 1998/24**

(73) Titulaire: **Stielau, Martin Ernst**
**7570 Grândola (PT)**

(72) Inventeur: **Stielau, Martin Ernst**
**7570 Grândola (PT)**

(74) Mandataire: **Pereira da Cruz, Joao**
**J. Pereira da Cruz, S.A.**
**Rua Vitor Cordon, 14**
**1249-103 Lisboa (PT)**

(56) Documents cités:
- **CHEMISCHES ZENTRALBLATT, vol. 2, 1964, XP002017150 YAMADA: "HERSTELLUNG VON POLYURETHANEN" & JP,A,36 004 840 1 Octobre 1958**
- **DATABASE WPI Week 8939 Derwent Publications Ltd., London, GB; AN 280940 XP002017151 "CASHEW RESIN MODOFIED POLYURETHANE COATING COMPOSITION" & JP,A,01 203 474 (SAITO/TOSHIN) , 16 Août 1989**

Remarques:
Le dossier contient des informations techniques présentées postérieurement au dépôt de la demande et ne figurant pas dans le présent fascicule.

Printed by Jouve, 75001 PARIS (FR)

## Description

### Domaines d'emploi

La présente invention concerne les polymères à base d'huile de coquille de noix de cajou (à partir de maintenant HCNC) qui ensemble avec des di- et/ou polyisocyanates peuvent constituer des multiples réseaux moléculaires.

### Précédants

Le HCNC est un sous-produit de l'industrie alimentaire de la préparation de la noix de cajou.

Ce liquide, se trouvant sous la coquille de la noix et qui se libère au moment de son ouverture, est un mélange 9:1 d'un acide gras (acide anacardique, qui porte un groupement phénolique au anneau benzénique ) et un diphenol (Cardol), les deux avec des chaînes latérales avec 15 atomes de carbone et 27 d'hydrogène et une à trois doubles liaisons.

Les utilisations actuelles de ce produit se trouvent principalement dans le domaine des phenoplastes, ou en négligeant les chaînes avec leurs doubles liaisons, on fait:

- après avoir décarboxyler l'acide gras grâce à une petite quantité d'acide sulfurique.
- réagir les groupements phénoliques avec des aldéhydes. Il en résulte, des produits qui se caractérisent surtout par leur grande résistance à la chaleur et à l'abrasion.

Le brevet japonais n° 33-27 905 de Showa du 1.10.1958 enseigne une nouvelle application pour ce produit en le faisant réagir avec des di-et/ou polyisocyanates. Cette méthode de fabrication de polyuréthanne, grâce à une réaction entre HCNC et un polyisocyanate, montre la possibilité de faire dimeriser le HCNC en présence de catalyseur de polymerisation et à des températures allant jusqu'à 140°C. Le résultat de cette préparation est un produit très visqueux, qui pour pouvoir être utiliser d'une manière pratique avec des isocyanates, doit être laver et sécher préalablement.

Le brevet allemand n° 2152 606 du 22.10.71 de Bayer AG enseigne dans le cadre d'un procédé d'une plastification interne d'une résine epoxydique, que des groupements phénoliques peuvent être utilisés pour bloquer temporairement des groupements NCO du excèdent de polyisocyantes des prépolymères. Après une réaction suivante, dans laquelle des amines tertiaires prennent la place des phénols, ceux-ci restant libres dans le produit.

### Contenue de l'invention

La présente invention montre comment des polymères à base de HCNC peuvent être réalisés d'une manière plus simple, et des produits avec des groupements NCO bloqués d'une manière plus propre en liant les groupements phénoliques libérés à un aldéhyde disponible. On peut, grâce aux procèdes inventés, réaliser des produits aussi variés que: mousses rigides, élastomères, caoutchoucs thermoplastiques ou des liants monocomposants sans solvants.

### Description de l'invention

Le HCNC peut avec des polyisocyanates réagir à trois niveaux différents:

1. Celui des COOH de l'acide gras, selon la réaction de Würtz:

$$RCOOH + OCN\text{-}R' \rightarrow R'\text{-}NH\text{-}CO\text{-}R + CO_2$$

2. Celui des double liaisons des chaînes latérales, et
3. Celui des groupements phénoliques des anneaux.

Le premier niveau est toujours intéressant quand l'expansion d'un produit est souhaitée. Ainsi peut-on avec l'attaque simultanée d'un polyisocyanate, aux trois niveaux, réaliser une mousse rigide d'une excellente qualité. Des composants polymérisables différents s'obtiennent ou bien par simple chauffage du HCNC ou bien par la préparation suivante. On ajoute une petite quantité d'acide sulfurique dilué à l'huile et on chauffe. Autour de 130°C le $CO_2$ du carboxyl s'échappe, en chauffant d'avantage, on progresse en concentration et dimerisation. En ajoutant un polyisocyanate on obtient des produits plus ou moins réticulés.

Par rapport au brevet de Bayer ci-dessus mentionné et la possibilité de bloquer temporairement les groupements NCO d'un isocyanate on procède de la manière suivante. On chauffe le HCNC avec une petite quantité d'acide sulfurique dilué jusqu'à 180°C, on laisse refroidir jusqu'à 120°C et on ajoute une quantité équivalente en TDI. On garde ce mélange à une température de 80°C jusqu'à ce qu'il n'y ai plus d'isocyanate libre.

A partir d'un tel composant on peut facilement en y ajoutant un second réaliser une colle monocomposante.

Cette deuxième composante est par exemple un mélange de HCNC et de Furfural, lequel avait été préalablement chauffé avec une petite quantité de triethylamine et laissé refroidir à température ambiante. ( Il a été découvert, qu'un tel mélange reste stable à cette température ).

Si la quantité de Furfural dans le deuxième mélange correspond à la quantité totale du HCNC décarboxylé et si on chauffe le mélange de la première préparation avec celui de la seconde à une température au delà de 150°C, alors les groupements NCO initialement bloqués se libèrent et réagissent avec le COOH de la seconde préparation, les groupements phénoliques réagissent avec le Furfural, et donnent un produit très brillant, dur mais quand même flexible.

La préparation avec l'isocyanate bloqué peut - analogue au brevet de Bayer - être utilisée pour flexibiliser des résines epoxydiques ou, en chauffant, réaliser des produits élastiques.

Un mélange équivalent HCNC et Furfural peut - comme explique l'exemple suivant - servir de composant pour la fabrication d'une mousse rigide, sous la condition qu'un isocyanate puisse réagir préalablement avec les OH des carboxyls du HCNC.

## Exemple 1

On mélange 100 g de HCNC avec 28 g de Furfural et on chauffe à 150 °C. D'un mélange rapide avec 32 g de TDI ou 49 g de MDI résulte: expansion, reticulation et durcissement. La mousse rigide qui en résulte, obtient ses caractéristiques définitives après quelques jours.

## Exemple 2

Ici suivra la description de la fabrication de la colle monocomposante ci-dessus mentionnée:

Un premier mélange de 34 g de HNCN et 19 g de Furfural sera chauffé tout en l'agitant à une température de 150°C.

Un deuxième mélange, se composant de 34 g de HNCN et 0,68 g d'acide sulfurique (50 %) est chauffé à une température de 170°C, refroidi à 110°C et complété de 7 g de TDI. On agite lentement sous azote pendant 4 heures à une température de 70°C et on laisse refroidir.

On mélange le premier mélange avec le deuxième et obtient un liquide stable, qui à une température supérieure à 140°C, quand les groupements NCO se libèrent des groupements phénoliques et peuvent réagir avec les COOH du HCNC du premier mélange. Les groupements phénoliques libérés réagissent avec le reste du Furfural du premier mélange.

## Exemple 3

Pour produire de la mousse rigide on agite 100 g de HNCN avec 90 g de MDI. La réaction exothermique et l'expansion sont presque immédiates. Le durcissement, selon la température, est d' environ une heure.

## Exemple 4

On réchauffe 100 g de HNCN à une température de 300°C. Après refroidissement à température ambiante, on ajoute 40 g de MDI et on mélange bien. Après réaction exothermique on obtient un duromère d'une bonne résistance mécanique et chimique.

## Revendications

1. Procédé de fabrication d' un composant d'une matière plastique à base d'huile de coquille de noix de cajou (HCNC), dont les groupements phénoliques sont temporairement bloqués par des groupements NCO d'un di- et/ou polyisocyanate, caractérisé par

   a) La decarboxylation complète de HCNC grâce p.ex. à une addition d'une petite quantité d'acide sulfurique diluée.
   b) L'addition d'une quantité équivalente de TDI avant dimérisation par chauffage de l'HCNC.
   c) Un chauffage renouvelé, jusqu'au blocage complet de l'isocyanate.

2. Procédé de fabrication d'un composant de matière plastique à base de HCNC qui précondense avec un aldéhyde de préférence du Furfural et caractérisé par:

   a) Le rechaufement du HCNC avec une petite quantité de triethylamine jusqu'à env.170°C.
   b) L'addition d'une quantité équivalente d'un aldéhyde (de préférence Furfural)
   c) Un rechaufement renouvelé jusqu'au début d'une condensation.

3. Procédé selon les revendications 1 et 2 qui consiste à mélanger des quantités équivalentes du composant selon la revendication 1 avec le composant selon la revendication 2.

4. Procédé de fabrication d'un polymère, caractérisé par le fait q'un di- et/ou polyisocyanate réagit avec l'HCNC, initialement decarboxylé, p. ex. en y ajoutant une petite quantité d'acide sulfurique, avant de le chauffer à une température supérieure à 140°C.

5. Procédé de fabrication d'une mousse rigide, caractérisé par le fait qu'un di- et/ou polyisocyanate réagit avec de l'HCNC.

## Claims

1. Process for manufacturing a plastic compound made from cashew nutshell oil (CNSO), whose phenolic groups are temporarily blocked by NCO groups of a di- and/or polyisocyanate characterised by:

   a) Complete decarboxylation of the CNSO for example by adding a small amount of diluted sulphuric acid.

   b) The addition of a small quantity of TDI before the dimerisation of the CNSO by heating.

c) Further heating, until the isocyanate has been totally blocked.

2. Process for manufacturing a plastic compound made from CNSO which precondenses with an aldehyde, preferably Furfural, characterised by:

a) The reheating of the CNSO with a small quantity of triethylamine to around 170°C.

b) The addition of an equal amount of an aldehyde (preferably Furfural).

c) Further reheating until condensation begins.

3. Process according to claims 1 and 2, characterised in that an equal amount of the compound of claim 1 is mixed with the compound of claim 2.

4. Process for manufacturing a polymer, characterised in that a di- and/or polyisocyanate is reacted with the CNSO, initially decarboxylated, for example by adding a small amount of sulphuric acid before heating the mixture to a temperature higher than 140°C.

5. Process for manufacturing a rigid foam, characterised in that that a di- and/or polyisocyanate is reacted with the CNSO.

**Patentansprüche**

1. Verfahren zur Herstellung einer Kunststoffkomponente auf Basis von Cashewnußschalenöl (CNSÖ) dessen Phenolgruppen vorübergehend durch die NCO-Gruppen eines Di-und/oder Polyisocyanates blockiert worden sind, dadurch gekennzeichnet, daß:

a) das CNSÖ z.B.mittels des Zusatzes einer kleinen Menge verdünnter Schwefelsäure vollständig decarboxylisiert worden ist.
b) Vor der Dimerisierung durch Erhitzen eine äquivalente Menge an TDI hinzugefügt worden ist.
c) Erneut, bis zur kompletten Blockierung des Isocyanates erhitzt wurde.

2. Verfahren zur Herstellung einer Kunststoffkomponente auf Basis von CNSÖ welches mit einem Aldehyd, vorzugsweise Furfural, präkondensiert woden und dadurch dadurch gekennzeichnet ist, daß:

a) das CNSÖ mit einer kleinen Menge Triethylamin bis etwa 170°C erhitzt wird.
b) Eine äquivalente Menge von einem Aldehyd (vorzugsweise Furfural) hinzugegeben wird.

c) Erneut bis zum Beginn einer Kondensation erhitzt wird.

3. Verfahren gemäß 1 und 2 dadurch gekennzeicnet daß äquivalente Mengen der Komponente gemäß 2 vermischt werden.

4. Verfahren zur Herstellung eines Polymers dadurch gekennzeichnet daß ein Di-und/oder Polyisocyanat mit einem CNSÖ reagiert, welches zuvor-z.B. durch den Zusatz einer kleinen Menge von Schwefelsäure und anschließender Eritzung auf über 140°C - vollständig decarboxylisiert worden ist.

5. Verfahren zur Herstellung von Hartschaum, dadurch gekennzeichnet, daß ein Di-und/order Polyisocyanat mit CNSÖ reagiert.